# EUROPEAN PATENT SPECIFICATION

(11) **EP 4 013 978 B1**
(45) Date of publication and mention of the grant of the patent: **16.08.2023**
(21) Application number: 19787493.6
(22) Date of filing: 17.08.2019
(51) Int. Cl.: F16H 25/22

(54) **LINEAR ACTUATOR**
LINEARER AKTUATOR
ACTIONNEUR LINÉAIRE

(43) Date of publication of application: 22.06.2022
(73) Proprietor: EXCESS ENGINEERING AS, 4307 Sandnes (NO)
(72) Inventor: KALVATN, Ove, 4032 Stavanger (NO); MOKRZYCKI, Adam, 4055 Sola (NO); ELLINGSEN, Jan, 4046 Hafrsfjord (NO)
(74) Representative: Gevers Patents
(86) International application number: PCT/NO2019/050168
(87) International publication number: WO 2021/034200

(56) References cited:
- NO-A1- 20 180 246
- US-A- 5 899 114

## Description

### BACKGROUND ART

Industry today has high focus on efficiency, environment and digitalization to perform operations at land, at sea and subsea. One of the focus over the past years is to use efficient electric power to perform the tasks as to replace the more inefficient hydraulic systems. Many tasks are already performed by electric motors today. One main advantage of the hydraulic systems is that in a compact system it is possible to transfer high force by use of hydraulic cylinders and actuators. Many systems have been patented and developed to compete with the hydraulic actuators, but low efficiency and large building size has prevented electric energy to become the preferred method. The present invention relates to an improved and more efficient system of transferring the rotational torque into linear force. The present invention consisting of a compact ball screw linear actuator system with recirculation of bearing balls and provides the required efficiency and accuracy demanded by the industry. As a result of the new invention more hydraulic systems can be replaced by electrical power able to perform more accurate tests, more environmental friendly, efficient operation and allow for more remote operated and digitalized systems.

The word "linear actuator" is an ambiguous term used to broadly describe essentially any process that extends and retract a thrust member in a linear movement. The wide range term "linear actuator" is used to describe systems both in space, at surface, subsea and downhole. Linear actuators are operated by various known mechanisms, hydraulic, pneumatic, electric and manually. In addition, a further confusion is introduced as the word "linear" in the term "linear actuator" does not limit this application's use of rotational motion to perform the linear movement. In this context the word "linear" includes an apparatus converting rotational motions into a linear motion to extend and retract a thrust member, sometimes with a work piece fixed to its end to perform certain tasks.

Linear actuators are fast, precise and are relatively easy to use. One major objective of the invention is to provide a compact and reliable solutions for subsea equipment. Transforming subsea valve operations from hydraulic to electrical operated energy is something that the industry has been looking into and developed over years. This invention will provide the required compact design required for such application by using electrical motor(s) to operate the linear ball screw arrangement, thereby giving the required efficiency and reliability. This invention is suited both for land, at sea, in shallow water, deep-water and ultra deep-water locations.

Another major objective for this embodiment is to provide an electrical actuator for subsea operations that also provides a mechanical override function in the system, such secondary means to operate the actuator is often referred to as contingency in a situation where the primary operation method has failed. This is typically required on critical valves in subsea systems and in well control systems.

Another objective of this embodiment is to provide a mechanical system for locking the actuator in one position to prevent unintentional movement. Typically, this is required on well control system for preventing the valves to move in case of vibrations or other external forces.

At present there are a number of systems available on the market that can convert rotational movement into linear movement through a ball screw arrangement. Conventional ball screw and nut assembly has a structure that includes a round lead-screw having a continuous helical groove or thread (with accompanying lands) along its length and a follower nut or nut with a mating continuous helical groove or thread that cooperates with the external groove of the leadscrew to form a course or sized to contain a single-file row of plurality of balls, which operate in rolling contact with both the lead-screw groove and follower (or nut) groove as one is rotated relative to the other. In general, these systems include a screw and nut mechanism with recirculating balls to transform the rotational movement into linear movement or vice versa.

Ball screw design of this type have low frictional resistance and a smooth relative rotation as compared to other type of screw thread systems. A smooth lateral movement achieved in ball screw design facilitates accurate and high-speed operations as required in typically manufacturing apparatus and robotic systems.

In ball screw and nut design the balls are recirculated by rolling along the race or course by the relative motion of the screw and nut. As a result, a structure for by-pass to recirculate the balls are required. Conventional balls screw and nut design use a variety of techniques, including the use of external and internal recirculation systems.

The objective is achieved in accordance with the invention through the features which are specified in the description below and in the claims, that follow.

### IDENTIFICATION OF OBJECTS OF THE INVENTION

A primary object of this invention is to provide a compact device to efficient transform rotational movement in to linear (lateral) movement, and vice versa.

Another object is to provide a, ball screw device where the round lead-screw are formed as a hydraulic piston in a hydraulic cylinder whereas only the piston part of the lead-screw has helical grooves while the remaining lead-screw are shaped as a cylinder rod.

Another object is to provide a, ball screw device that uses the piston part of the lead-screw to recirculate the plurality of balls and uses rolling contact with the nut to transfer the load.

Another object is to provide a, ball screw device where the lead-screw formed as a piston and rod are not rotating enabling the invention to work as hydraulic cylinder.

Another object of the invention is to provide an accurate and precise tool enable to perform at a controllable speed with high positioning accuracy.

Another object of the invention is to provide a fully electrical linear actuator system without used of any hydraulics for transforming the rotational movement into linear movement, and vice versa.

Another object of the invention is to enable mechanical override for rotational motion by a Remote Operated Vehicle or similar as a secondary means to operate the actuator.

Another object of the invention is to enable operations both on surface, subsea and downhole in drilling or intervention operations

U.S 5337627 discloses a ball screw design used for transferring/tightening an object in a machine tool or in a molding machine. The drawback of this type of design having an external recirculation system is the overall size tends to be large and difficult to fit in small cylinders.

US6357100 discloses an apparatus for actuating tooling through a planetary screw for transferring high forces to activate riveting and other tooling's as part of automatic fastening.

US2004/0103734 Discloses an apparatus for converting rotational movement into linear movement by a ball screw and nut assembly with a internally circulating system for the plurality of the balls. And that shall be easier to manufacture. The drawback of this design is the dependency of a thread system on the center screw (lateral moving shaft) making the system overall size large if the lateral moving shaft needs to be sealed off du to ambient pressure or dusty environment.

US2009/0064811 discloses a ball screw design with downsized nut and simplified circulation structure for the plurality of the balls. The screw shaft and a nut member are threadingly engaged with each other through intermediation of balls. The drawback is the dependency of thread system on the lateral moving screw.

US2013/0133453 Discloses an internal circulating ball screw and threaded shaft. The design is large in size and difficult to fit into a compact linear actuator. This solution also required the lead screw to be rotating.

US2007/0240532 Discloses a spindle nut for a ball screw, having a continuous ball track.

EP2916042 Discloses an electric linear actuator which can reduce damage and wear of the housing and perform the anti-rotation of the nut with a simple structure to improve the reliability and manufacturing cost of the electric linear actuator. The drawback of this design is the dependency of the helical grooves on the screw shaft which tends to make the overall size large by using a driving screw shaft with proportionally same length as the stroke of the piston rod.

US2004200303A1 Discloses a ball Screw device comprises a nut having a thread groove in the inner peripheral Surface thereof, a Screw shaft having a thread groove in the outer peripheral Surface thereof and a plurality of balls interposed between the respective thread grooves. In the Screw shaft, the thread groove is of at least substantially one turn. In the screw shaft is provided a ball circulation groove for coupling the downstream and upstream Sides of the thread groove So that the balls are returned to the upstream Side from the downstream Side So as to be thereby circulated. The drawback of this design is that the balls disposed in the ball circulation grooves 33 and 34 can be subject to neither a radial load nor an axial load.

US5899114A also discloses an apparatus for providing rotational movement into linear movement.

### DESCRIPTION OF THE INVENTION

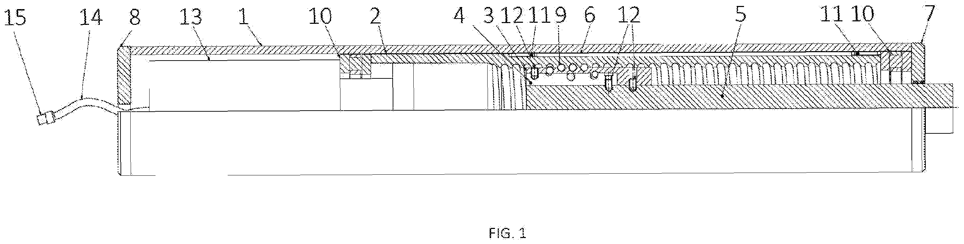

FIG. 1 is a schematic illustration of an example of a ball screw linear actuator device packed inside a casing according to an embodiment of the disclosure;
FIG. 2 is a cross sectional illustration of a ball screw linear actuator device showing an example of a ball screw arrangement and drive unit according to an embodiment of the disclosure;

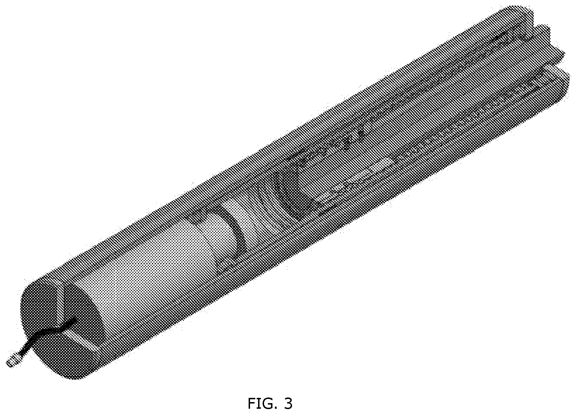

FIG. 3 shows orthogonal illustration of the ball screw linear actuator device, its drive unit with its electric coupler, the ball screw arrangement, front and rear ends and casing according to an embodiment of the disclosure;
FIG. 4 shows the exploded illustration of the ball screw linear actuator device, according to an embodiment of the disclosure;
FIG. 5 shows the exploded illustration of the force transmission element (5) and outer (3) and inner 84) lead-screws, according to an embodiment of the disclosure;
FIG. 6 shows the illustration of the force transmission element (5) wherein the inner (4) and outer (3) lead-screws and plurality of balls are put together, according to an embodiment of the disclosure;
Exemplary embodiment of the invention FIG. 1, shows a typical layout of a ball screw linear actuator device, comprising of an housing, referred to as casing (1) with a front end (7) and a rear end (8) forming one a sealed off compartment, where whereas the only members penetrating the said compartment is the force transmission element (5) and power and communication interface, here in this illustration formed as an cable (14).

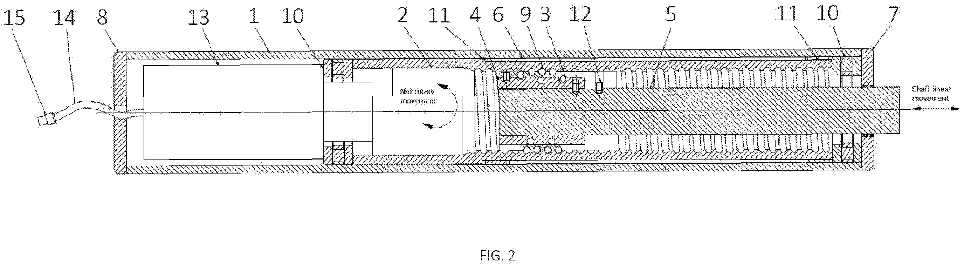

Further, the exemplary embodiment of the invention shown in FIG. 1 and FIG. 2, illustrates the preferred embodiment of the ball screw linear actuator arrangement inside the casing (1). The ball screw linear actuator assembly may include a transmission element (5), an inner lead-screw (4), outer lead-screw (3), fasteners (12) to secure the inner (4) and outer (3) lead-screw to the transmission element (5), a plurality of bearing balls (9) threadingly engaged between the outer lead-screw (3) and the ball screw nut (2), whereas the ball screw nut (2) are laterally (10) and radially (11) supported inside the casing (1), whereas the ball screw nut (2) are rotating inside the casing. Also shown in the embodiment are the spacer (6) between the radial bearings (11). Further the ball screw nut (2) may be connected to a drive unit (13).

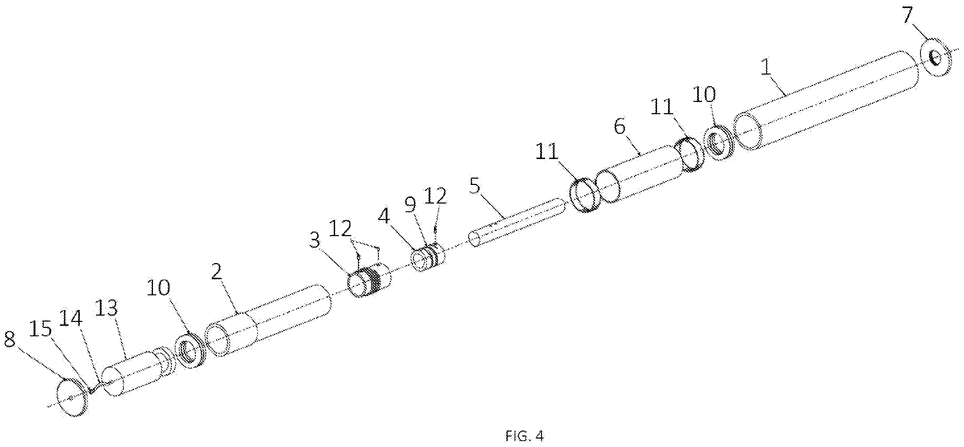

FIG. 4 illustrates the preferred embodiment of the ball screw linear actuator in a so called exploded view to clarify further the components included in the invention.

FIG. 2 illustrates the preferred embodiment of the ball screw nut (2), whereas the ball screw nut (2) having inner helical ball rolling surface with ball circulation grooves configured to rotate on the piston lead-screw (3) through a set of balls (9) to achieve lateral movement of the force transmission element (5), the ball screw nut may further be connected to the drive unit (13) as for providing the rotational movement of the ball screw nut (2). Rotational motion on of the ball screw nut (2) may also be provided by enforcing lateral movement on the force transmission element (5).

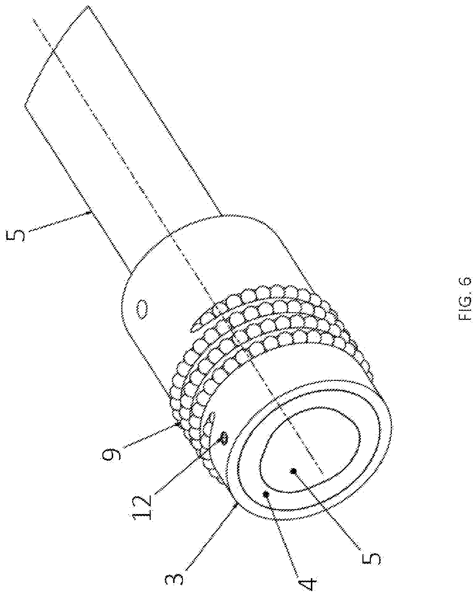

FIG. 6 illustrates the outer lead screw (3) of the invention shown with a plurality of bearing balls (9) inserted in the helical path grooves. The outer lead screw (3) does not rotate but is fixed to the force transmission element (5) either by fasteners, by friction, by a non-circular interface, here shown as an oval interface to the force transmission element (5) or a combination of methods. The threads of the outer lead screw (3) ends in a bearing ball exit and bearing ball entrance, dependent on the direction of rotation of the ball screw nut (2) the bearing ball exit and bearing ball entrance will change side. The bearing ball (9) entrance and exit are interfaced with the inner lead-screw (4) in such a way that the grooves forms a channel, race or course for the bearing balls (9) to advance into when the ball screw nut (2) is rotating.

FIG. 6 illustrates the inner lead screw (4) of the invention the inner lead screw (4) are formed with outer bound helical grooves that when assembled with the outer lead-screw (3) forms a channel that the bearing balls can advance through. The grooves of the inner lead-screw have grooves with a diameter slightly larger than the balls (9). The inner lead-screw does not rotate but are fixed to the force transmission element (5) either by fasteners, by friction, by a non-circular interface, here shown as an oval interface to the force transmission element (5) or a combination of methods. The inner lead-screw (4) grooves may also have a different groove pitch than the outer lead-screw. The inner lead-screw is used for recirculation of the plurality of bearing balls through the outer lead-screw (3) exit and entrance grooves. Inner and outer lead screw when invention is assembled forms a continuous groove path for the bearing balls to circulate and roll in, rolling directions of the bearing balls are determined by the direction of rotation of the ball screw nut (2).

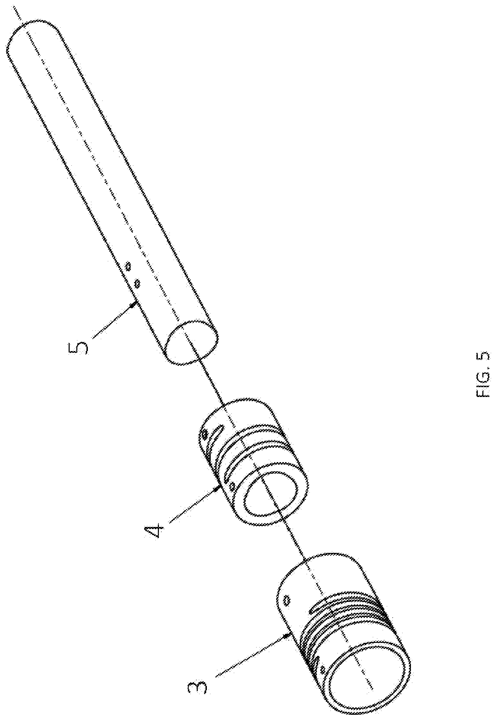

An example of one configuration of grooves from the inner and outer lead-screws are shown in FIG. 5. As the inner lead-screw (4) grooves gradually slopes into a diameter slightly larger than the balls. The outer lead-screw (3) grooves less than half the diameter of the bearing balls deep with adequate clearance for the bearing balls to pass unimpeded over the land between the adjacent grooves of the outer lead screw (3).

Cooperation between the structure of the ball screw nut (2), outer lead-screw (3) and inner lead-screw (4) is absolute essential for the operation of the present invention, in order for ball bearing (9) to follow the recirculation return route through the inner lead-screw (4).

The force transmission element (5) is moved by rotating the ball screw nut (2), rotating the ball screw nut (2) to the right will move the force transmission element in a direction out of the enclosed casing (1), rotating the ball screw nut (2) to the left will retract the force transmission element (5) into the said casing (1). However the ball screw nut and outer and inner grooves could as an example be arranged with pitch the opposite way and rotating the ball screw nut (2) to the left will extend the force transmission element (5) out of the casing (1) and vice versa.

The illustrated embodiment in Fig. 1 and Fig.2 may also use an electric drive unit. Electric power and communication may be supplied via a suitable electrical control line (14) or control lines. The control lines (14) may be connected to a power source at suitable location either subsea or at surface. In some embodiments, the electrical control lines (14) are coupled to control modules (not shown) and enable transfer of desired electrical signals, e.g. power and data signals (communication).

Referring now back to FIG. 1 and FIG. 2 , the force transmission element (5) may comprise a movable stem, or other suitable drive member which may be selectively operated via the electric motor or other type of motive member to actuate a valve or other driven component in a host at surface or subsea. According to one embodiment, the subsea electrical ball screw linear actuator comprises an actuator body having a rear face and a front face. At least one electrical connector and a mechanical interface are both positioned along the rear face.

Depending on the application, the ball screw linear actuator may be used in cooperation with various types of hosts. In subsea applications, for example, the subsea host may comprise a variety of subsea production or processing devices. Examples of such subsea host structures include a subsea tree, manifold, pump, pipeline end manifold (PLEM), pipeline end termination (PLET), or other subsea hosts.

In some embodiments, the linear ball screw actuator is used in subsea operations such as Cone Penetration Testing apparatus. Cone Penetration Test apparatus is used in the field geotechnical investigation of soil conditions. In such application the ball screw linear actuator is either connected to a umbilical for transferring power and communication or includes a battery package for operation of the linear ball screw actuator.

In some embodiments, the actuator mechanical interface also may comprise a bucket coupling sized and constructed for receipt in a bucket receiver of host mechanical interface. For example, the bucket coupling, and corresponding bucket receiver may be in the form of ROV bucket couplings and ROV buckets, respectively. For rotary drive members, the ROV interface between the ROV bucket coupling and bucket receiver may be constructed with a variety of cooperating configurations, e.g. according to standards described in ISO 13628-8 or API 17H.

Depending on the parameters of a given subsea operation, the electric control lines may be part of an electrical flying lead (EFL) connected between subsea control module and host electrical connectors. Additionally, actuator electrical connectors and corresponding host electrical connectors may be constructed as wet-mate connectors to facilitate coupling and decoupling in a liquid environment with simple linear motion of the electrical actuator. The installation and de-installation of the electrical actuator with respect to the host may be accomplished without a live electrical connection, i.e. without electrical power supplied to the electrical actuator during engagement and disengagement with respect to host.

The actuator mechanical interface may comprise a drive member which automatically engages the driven component, e.g. valve, via linkage or other suitable mechanism. In the illustrated embodiment, the linkage extends to and forms part of the host mechanical interface. The drive member may be in the form of a drive stem which is linearly movable by a motive member within actuator body

By way of example, if the ball screw linear actuator is used for subsea operations the electrical interface may comprise at least one electrical connector positioned along the rear face. In the example illustrated, the electrical connectors are positioned along rear face for electrical engagement with corresponding electrical connectors of host electrical interface. By way of example, the electrical connectors may comprise male/female connectors, respectively, or vice versa.

The electrical connectors (e.g. male/female connectors) may be utilized for transmission of desired electrical signals, e.g. electrical power signals, control signals, and data communication signals.

Various types of electrical connectors and/or related components may be utilized to operate the ball screw linear actuator. One example comprises stab plate connectors. In some applications, the host electrical connectors may be installed at a fixed position on, for example, a panel of the host structure but with a predefined free-floating capability for tolerance compensation. The electrical connectors also may be constructed in the form of inductive couplings able to transmit electrical power and/or data signals.

## Claims

1. Apparatus for providing rotational movement into linear movement and vice versa, the apparatus comprising: - a ball screw nut (2),
- an outer casing (1) supporting the ball screw nut (2) laterally and radially (11)
- the ball screw nut (2) having inner helical ball rolling surface with at least two ball circulation grooves configured to rotate on the piston lead-screw by a plurality of balls to achieve lateral movement of the force transmission element (5)
- the ball screw nut having a drive unit
- an outer lead-screw (3) with an outer ball rolling surface with at least two rolling and circulating grooves including a ball exit groove and a ball return groove communicating with the inner lead-screw (4)
- an internal piston lead-screw with a ball receiving groove and a ball exit groove communicating with the outer lead-screw with at least one ball circulation groove with different pitch than the outer piston lead-screw
**Characterised by**;
- the ball screw nut (2) is rotating inside the casing (1) and is threadingly engaged with the outer lead-screw (3) through a plurality of balls (9)
- the outer (3) and inner (4) lead-screws do not rotate but act as force transmission elements between the ball screw nut and plurality of balls to move the force transmission element (5) in either one or both directions at a controlled speed
- at least one electrical connector positioned along the front face

2. Apparatus for providing rotational movement into linear movement and vice versa according to claim 1, is connected to inner and outer piston lead-screws (3), (4) for transferring the lateral movement of the force transmission element

3. Apparatus for providing rotational movement into linear movement and vice versa according to any of claims 1 to 2 wherein a plurality of rolling members is running among first and second grooves of the nut and the outer lead-screw and the circulating channels in the inner lead-screw

4. Apparatus for providing rotational movement into linear movement and vice versa according to any of claims 1 to 3, wherein the inner lead-screw have maximum groove depth is slightly larger than the diameter of the balls

5. Apparatus for providing rotational movement into linear movement and vice versa according to claim 1, whereas the force transmission elements (5) is arranged as a rod

6. Apparatus for providing rotational movement into linear movement and vice versa according to claim 1, 2 and 5, is prevented from rotating

7. Apparatus for providing rotational movement into linear movement and vice versa according to claim 1, wherein the said device having a spring system for moving the rod laterally in a said direction.

8. Apparatus for providing rotational movement into linear movement and vice versa according to claim 1, wherein the casing supports the ball screw nut, laterally and radially and is connected to an electrical motor providing rotational energy in form of torque

9. Apparatus for providing rotational movement into linear movement and vice versa according to claim 1 and 8, wherein the at least one electrical connector comprises inductive couplings for transmission of power and data

10. Apparatus for providing rotational movement into linear movement and vice versa according to claim 1, wherein the at least one electrical connector is a wet-mate connector

11. Apparatus for providing rotational movement into linear movement and vice versa according to claim 10, wherein at least one connector comprises a plurality of electrical connectors

12. Apparatus for providing rotational movement into linear movement and vice versa according to claim 1, 10 and 11, wherein the casing supports the ball screw nut, laterally and radially and is connected to a mechanical override whereas the rotational energy in form of torque can be provided by a remote operated vehicle (ROV)

13. Apparatus for providing rotational movement into linear movement and vice versa according to claim 9 to 12, wherein the device can be operated directly with an ROV

14. Apparatus for providing rotational movement into linear movement and vice versa according to claim 1 to 13, wherein the casing (1) is oil filled and protected towards ambient pressure from the surrounding

15. Apparatus for providing rotational movement into linear movement and vice versa according to any of claims 1-13, further compromising a mechanical interface formed as a bucket coupling and a drive shaft

## Patentansprüche

1. Einrichtung zum Bereitstellen von Drehbewegung als lineare Bewegung und umgekehrt, wobei die Einrichtung Folgendes umfasst:
- eine Kugelumlaufmutter (2),
- ein Außengehäuse (1), das die Kugelumlaufmutter (2) seitlich und radial (11) stützt
- wobei die Kugelumlaufmutter (2) eine innere spiralförmige Kugelrollfläche mit mindestens zwei Kugelumlaufrillen aufweist, die so konfiguriert sind, dass sie sich durch eine Vielzahl von Kugeln auf der Kolbenleitspindel drehen, um eine seitliche Bewegung des Kraftübertragungselements (5) zu erreichen
- wobei die Kugelumlaufmutter eine Antriebseinheit aufweist
- eine äußere Leitspindel (3) mit einer äußeren Kugelrollfläche mit mindestens zwei Roll- und Umlaufrillen, einschließlich einer Kugelaustrittsrille und einer Kugelrückführungsrille, die mit der inneren Leitspindel (4) kommuniziert
- eine innere Kolbenleitspindel mit einer Kugelaufnahmerille und einer Kugelaustrittsrille, die mit der äußeren Leitspindel kommuniziert, mit mindestens einer Kugelumlaufrille mit einer anderen Steigung als die äußere Kolbenleitspindel
**dadurch gekennzeichnet, dass**
- die Kugelumlaufmutter (2) sich im Gehäuse (1) dreht und über eine Vielzahl von Kugeln (9) mit der äußeren Leitspindel (3) im Gewindeeingriff steht
- die äußere (3) und innere (4) Leitspindeln sich nicht drehen, sondern als Kraftübertragungselemente zwischen der Kugelumlaufmutter und der Vielzahl von Kugeln wirken, um das Kraftübertragungselement (5) mit einer gesteuerten Geschwindigkeit in entweder eine oder beide Richtungen zu bewegen
- mindestens einen elektrischen Steckverbinder, der entlang der Vorderseite positioniert ist.

2. Einrichtung zum Bereitstellen von Drehbewegung als lineare Bewegung und umgekehrt nach Anspruch 1, die mit inneren und äußeren Kolbenleitspindeln (3), (4) verbunden ist, um die seitliche Bewegung des Kraftübertragungselements zu übertragen.

3. Einrichtung zum Bereitstellen von Drehbewegung als lineare Bewegung und umgekehrt nach einem der Ansprüche 1 bis 2, wobei eine Vielzahl von Rollelementen zwischen ersten und zweiten Rillen der Mutter und der äußeren Leitspindel sowie den Umlaufkanälen in der inneren Leitspindel läuft.

4. Einrichtung zum Bereitstellen von Drehbewegung als lineare Bewegung und umgekehrt nach einem der Ansprüche 1 bis 3, wobei eine maximale Rillentiefe der inneren Leitspindel geringfügig größer als der Durchmesser der Kugeln ist.

5. Einrichtung zum Bereitstellen von Drehbewegung als lineare Bewegung und umgekehrt nach Anspruch 1, während das Kraftübertragungselement (5) als Stange eingerichtet ist.

6. Einrichtung zum Bereitstellen von Drehbewegung als lineare Bewegung und umgekehrt nach Anspruch 1, 2 und 5, die daran gehindert wird, sich zu drehen.

7. Einrichtung zum Bereitstellen von Drehbewegung als lineare Bewegung und umgekehrt nach Anspruch 1, wobei die Vorrichtung ein Federsystem zum seitlichen Bewegen der Stange in einer genannten Richtung aufweist.

8. Einrichtung zum Bereitstellen von Drehbewegung als lineare Bewegung und umgekehrt nach Anspruch 1, wobei das Gehäuse die Kugelumlaufmutter seitlich und radial stützt und mit einem Elektromotor verbunden ist, der Rotationsenergie in Form eines Drehmoments bereitstellt.

9. Einrichtung zum Bereitstellen von Drehbewegung als lineare Bewegung und umgekehrt nach Anspruch 1 und 8, wobei der mindestens eine elektrische Steckverbinder induktive Kopplungen zur Übertragung von Strom und Daten umfasst.

10. Einrichtung zum Bereitstellen von Drehbewegung als lineare Bewegung und umgekehrt nach Anspruch 1, wobei der mindestens eine elektrische Steckverbinder ein Nasskontakt-Steckverbinder ist.

11. Einrichtung zum Bereitstellen von Drehbewegung als lineare Bewegung und umgekehrt nach Anspruch 10, wobei mindestens ein Steckverbinder eine Vielzahl elektrischer Steckverbinder umfasst.

12. Einrichtung zum Bereitstellen von Drehbewegung als lineare Bewegung und umgekehrt nach Anspruch 1, 10 und 11, wobei das Gehäuse die Kugelumlaufmutter seitlich und radial stützt und mit einer mechanischen Übersteuerung verbunden ist, während die Rotationsenergie durch ein ferngesteuertes Fahrzeug (ROV) in Form eines Drehmoments bereitgestellt werden kann.

13. Einrichtung zum Bereitstellen von Drehbewegung als lineare Bewegung und umgekehrt nach Anspruch 9 bis 12, wobei die Vorrichtung direkt mit einem ROV betrieben werden kann.

14. Einrichtung zum Bereitstellen von Drehbewegung als lineare Bewegung und umgekehrt nach Anspruch 1 bis 13, wobei das Gehäuse (1) mit Öl gefüllt und gegen Umgebungsdruck aus der Umgebung geschützt ist.

15. Einrichtung zum Bereitstellen von Drehbewegung als lineare Bewegung und umgekehrt nach einem der Ansprüche 1-13, die weiter eine mechanische Verbindung in Form einer Becherkupplung und einer Antriebswelle umfasst.

## Revendications

1. Appareil pour convertir un mouvement de rotation en un mouvement linéaire et vice versa, l'appareil comprenant : - un écrou de vis à billes (2),
- un boîtier externe (1) supportant l'écrou de vis à billes (2) latéralement et radialement (11)
- l'écrou de vis à billes (2) présentant une surface de roulement de billes hélicoïdale interne avec au moins deux rainures de circulation de billes configurées pour tourner sur la vis-mère de piston au moyen d'une pluralité de billes pour obtenir un mouvement latéral de l'élément de transmission de force (5)
- l'écrou de vis à billes présentant une unité d'entraînement
- une vis-mère externe (3) avec une surface de roulement de billes externe avec au moins deux rainures de roulement et de circulation incluant une rainure de sortie de billes et une rainure de retour de billes communiquant avec la vis-mère interne (4)
- une vis-mère de piston interne avec une rainure de réception de billes et une rainure de sortie de billes communiquant avec la vis-mère externe avec au moins une rainure de circulation de billes avec un pas différent de la vis-mère de piston externe
**caractérisé en ce que** :
- l'écrou de vis à billes (2) tourne à l'intérieur du boîtier (1) et est mis en prise par vissage avec la vis-mère externe (3) au moyen d'une pluralité de billes (9)
- les vis-mères externe (3) et interne (4) ne tournent pas mais agissent comme des éléments de transmission de force entre l'écrou de vis à billes et la pluralité de billes pour déplacer l'élément de transmission de force (5) soit dans une direction, soit dans les deux directions, à une vitesse commandée
- au moins un connecteur électrique positionné le long de la face avant.

2. Appareil pour convertir un mouvement de rotation en un mouvement linéaire et vice versa selon la revendication 1, qui est relié à des vis-mères de piston interne et externe (3), (4) pour transférer le mouvement latéral de l'élément de transmission de force.

3. Appareil pour convertir un mouvement de rotation en un mouvement linéaire et vice versa selon l'une quelconque des revendications 1 à 2, dans lequel une pluralité d'éléments roulants s'étendent entre les première et seconde rainures de l'écrou et la vis-mère externe et les canaux de circulation dans la vis-mère interne.

4. Appareil pour convertir un mouvement de rotation en un mouvement linéaire et vice versa selon l'une quelconque des revendications 1 à 3, dans lequel la vis-mère interne présente une profondeur de rainure maximale qui est légèrement supérieure au diamètre des billes.

5. Appareil pour convertir un mouvement de rotation en un mouvement linéaire et vice versa selon la revendication 1, dans lequel les éléments de transmission de force (5) sont agencés sous la forme d'une tige.

6. Appareil pour convertir un mouvement de rotation en un mouvement linéaire et vice versa selon les revendications 1, 2 et 5, qui est empêché de tourner.

7. Appareil pour convertir un mouvement de rotation en un mouvement linéaire et vice versa selon la revendication 1, dans lequel ledit dispositif présente un système de ressort pour déplacer la tige latéralement dans une dite direction.

8. Appareil pour convertir un mouvement de rotation en un mouvement linéaire et vice versa selon la revendication 1, dans lequel le boîtier supporte l'écrou de vis à billes, latéralement et radialement, et est connecté à un moteur électrique fournissant une énergie de rotation sous la forme d'un couple.

9. Appareil pour convertir un mouvement de rotation en un mouvement linéaire et vice versa selon les revendications 1 et 8, dans lequel le au moins un connecteur électrique comprend des couplages inductifs pour une transmission de puissance et de données.

10. Appareil pour convertir un mouvement de rotation en un mouvement linéaire et vice versa selon la revendication 1, dans lequel le au moins un connecteur électrique est un connecteur à couplage humide.

11. Appareil pour convertir un mouvement de rotation en un mouvement linéaire et vice versa selon la revendication 10, dans lequel au moins un connecteur comprend une pluralité de connecteurs électriques.

12. Appareil pour convertir un mouvement de rotation en un mouvement linéaire et vice versa selon les revendications 1, 10 et 11, dans lequel le boîtier supporte l'écrou de vis à billes, latéralement et radialement, et est relié à une commande mécanique tandis que l'énergie de rotation sous la forme d'un couple peut être fournie par un véhicule télécommandé (ROV).

13. Appareil pour convertir un mouvement de rotation en un mouvement linéaire et vice versa selon les revendications 9 à 12, dans lequel le dispositif peut être actionné directement à l'aide d'un ROV.

14. Appareil pour convertir un mouvement de rotation en un mouvement linéaire et vice versa selon les revendications 1 à 13, dans lequel le boîtier (1) est rempli d'huile et protégé contre la pression ambiante de l'environnement.

15. Appareil pour convertir un mouvement de rotation en un mouvement linéaire et vice versa selon l'une quelconque des revendications 1-13, comprenant en outre une interface mécanique formée sous la forme d'un raccord de godet et d'un arbre d'entraînement.
